# EUROPÄISCHE PATENTSCHRIFT

(11) **EP 4 062 392 B1**
(45) Veröffentlichungstag und Bekanntmachung des Hinweises auf die Patenterteilung: **24.12.2025**
(21) Anmeldenummer: 20808067.1
(22) Anmeldetag: 16.11.2020
(51) Int. Cl.: G09B 23/30

(54) **MEDIZINISCHES TRAININGSMODELL MIT ADDITIV GEFERTIGTEN UND INDIVIDUALISIERBAREN GEFÄSSMODELLEN**
MEDICAL TRAINING MODEL COMPRISING ADDITIVELY MANUFACTURED CUSTOMISABLE VESSEL MODELS
MODÈLE DE FORMATION MÉDICALE COMPRENANT DES MODÈLES DE VAISSEAUX PERSONNALISABLES FABRIQUÉS DE MANIÈRE ADDITIVE

(30) Priorität: 20.11.2019 DE 102019008058
(43) Veröffentlichungstag der Anmeldung: 28.09.2022
(73) Patentinhaber: Technische Universität Hamburg, 21073 Hamburg (DE); TuTech Innovation GmbH, 21079 Hamburg (DE)
(72) Erfinder: SPALLEK, Johanna, 20251 Hamburg (DE); KRAUSE, Dieter, 21244 Buchholz (DE)
(74) Vertreter: Sparing Röhl Henseler
(86) Internationale Anmeldenummer: PCT/EP2020/082199
(87) Internationale Veröffentlichungsnummer: WO 2021/099245

(56) Entgegenhaltungen:
- EP-A1- 0 158 030
- US-A- 4 076 285
- HO CHUNG KIT ET AL: "Wall-Less Flow Phantoms With Tortuous Vascular Geometries: Design Principles and a Patient-Specific Model Fabrication Example", IEEE TRANSACTIONS ON ULTRASONICS, FERROELECTRICS, AND FREQUENCY CONTROL, IEEE, USA, vol. 64, no. 1, 1 January 2017 (2017-01-01), pages 25 - 38, XP011638840, ISSN: 0885-3010, [retrieved on 20170112], DOI: 10.1109/TUFFC.2016.2636129
- KENJI SUGIU ET AL: "Artificial Cerebral Aneurysm Model for Medical Testing, Training, and Research.", NEUROLOGIA MEDICO-CHIRURGICA, vol. 43, no. 2, 1 February 2003 (2003-02-01), pages 69 - 73, XP055085121, ISSN: 0470-8105, DOI: 10.2176/nmc.43.69
- JOHANNA SPALLEK ET AL: "Design for Mass Adaptation of the Neurointerventional Training Model HANNES with Patient-Specific Aneurysm Models", PROCEEDINGS OF THE DESIGN SOCIETY: INTERNATIONAL CONFERENCE ON ENGINEERING DESIGN, vol. 1, no. 1, 1 July 2019 (2019-07-01), pages 897 - 906, XP055763807, DOI: 10.1017/dsi.2019.94
- JOHANNA SPALLEK ET AL: "Process Types of Customisation and Personalisation in Design for Additive Manufacturing Applied to Vascular Models", PROCEDIA CIRP, vol. 50, 1 January 2016 (2016-01-01), NL, pages 281 - 286, XP055763805, ISSN: 2212-8271, DOI: 10.1016/j.procir.2016.05.022

## Beschreibung

Die Erfindung betrifft ein medizinisches Trainingsmodell nach dem Oberbegriff des Anspruchs 1.

Aus SPALLEK, J., KUHL, J., WORTMANN, N., BUHK, J., FRÖLICH, A., NAWKA, M., KRAUSE, D., et al (2019). Design for Mass Adaption of the Neurointerventional Training Model HANNES with Patient-Specific Aneurysm Models. In: Proceedings of the Design Society: International Conference on Engineering Design, 1(1), S. 897-906. doi:10.1017/dsi.2019.94, Published online by Cambridge University Press: 26 July 2019 ist bekannt das neurointerventionelle Trainingsmodell, genannt HANNES (HAmburger ANatomisches NEurointerventionelles Simulationsmodell). Entwickelt wurde HANNES von der TU Hamburg im Rahmen des Projekts ELBE-NTM, und zwar gefördert durch das Bundesministerium für Bildung und Forschung der BRD im Rahmen der BMBF-Fördermaßnahme "Alternativmethoden zum Tierversuch".

Ein medizinisches Trainingsmodell bietet eine Vielzahl von verschiedenen Verwertungspotentialen und kann unter anderem für die Aus- und Weiterbildung von Medizinern in der minimalinvasiven Katheterbehandlung von Blutgefäßkrankheiten wie Aneurysmen (Aussackung der Gefäßwand) genutzt werden. Dadurch werden die für Behandlungstraining und Schulungen verwendeten Tierversuche ersetzt und durch eine Nachstellung relevanter Gefäße eine realitätsnahe Abbildung der menschlichen Anatomie ermöglicht.

Aus DE 20 2017 006 757 U1 ist ein Trainingsmodell zur Ausbildung von Chirurgen und zur Erprobung von komplizierten operativen Eingriffen zur Erhöhung der Erfolgschancen eines operativen Eingriffs in verschiedenen chirurgischen Disziplinen bekannt. Das Trainingsmodell erlaubt eine individuelle Anpassung anhand variabel zusammenstellbarer Komponenten. Dazu umfasst das Trainingsmodell eine austauschbare Übungsregion einer anatomischen Nachbildung sowie ein Speichermedium für Patientendaten. Die austauschbare Übungsregion entspricht dem Operationsfeld für den Benutzer des Trainingsmodells, in welchem er operative Eingriffe, wozu auch minimal-invasive Methoden zählen, übt. Die austauschbare Übungsregion stellt dabei eine anatomische Nachbildung einer Körperregion dar. Die austauschbare Übungsregion kann dabei mittels additiver Fertigungsverfahren auf Basis von dreidimensionalen Patientendaten herstellbar sein, wodurch jedes Training individuell ausgestaltet und durchführbar ist. Auch Blutgefäße wie die Vena jugularis und die Arteria carotis können nachgebildet werden.

Mittels eines ferner vorgesehenen Speichermediums sind zudem patientenindividuelle Daten abspeicherbar, wie die Daten der Krankenakte des Patienten, damit sich der Operateur vor dem Übungseingriff ein Bild des anstehenden und auszuführenden Trainings machen kann. Mittels Signalübertragung kann der chirurgische Eingriff auch elektronisch überwacht und gesteuert werden.

Für eine richtige und dauerhafte Positionierung der Übungsregion ist diese lösbar mit der anatomischen Nachbildung eines Körperteils verbunden.

Nachbildungen eines Kreislaufsystems mit einer pulsierenden Strömung fehlen. Dies ist insbesondere nachteilig, wenn die Übungsregion das Blutgefäßsystem eines Menschen betrifft. Im Gefäßsystem breitet sich der arterielle Puls als Welle eines Volumenstroms mit Druckwerten im Bereich von beispielsweise 8 bis 17 kPa aus. Es fehlt deshalb auch an einer abdichtenden Anbindung der patientenspezifischen Übungsregion an das Trainingsmodell.

Aus DE 202012011452 U1 ist ein neurochirurgisches Trainingsmodell bekannt, das eine virtuelle Eingriffsplanung erlaubt. Die Arbeitsschritte des Trainings werden an einem Phantom erfasst und virtuell abgebildet und mit einem vorher festgelegten Referenzzugang verglichen und bewertet. Als Gesamtsystem aus Hardware, Software und aufbereiteten Datensätzen ermöglicht das Trainingssystem die Planung und Simulation von ausgewählten Hirntumoroperationen und kann damit erheblich zum Erlernen, Verständnis und Training der Abläufe solcher Operationen beitragen.

Nachteilig bei einem solchen Trainingsphantomsystem für neurochirurgische Eingriffe ist, dass es den realen Bedingungen in einem Operationssaal nur wenig nahe kommt. Die medizinischen Instrumente unterscheiden sich von den in der Realität genutzten. Besonders in der Neurochirurgie ist das Training endoskopischer Verfahren an detailgetreuen Nachbildungen der menschlichen Anatomie allerdings wünschenswert, da hier an den Chirurgen besonders hohe Anforderungen gestellt werden.

Aufgabe der Erfindung ist es daher, ein Trainingsmodell zu schaffen, mit dessen Hilfe in einfacher Weise eine Übungssituation im Zusammenhang mit den Stromgebieten der arteriellen Blutversorgung des Gehirns geschaffen werden kann, die den entsprechenden realen Verfahrenssituationen möglichst nahe kommt. Gleichzeitig soll dieser Vorteil durch eine Vorrichtung ermöglicht werden, die einfach und kostengünstig in der Herstellung ist.

Diese Aufgabe wird durch die Merkmale des Anspruchs 1 gelöst.

Hierdurch wird ein medizinisches Trainingsmodell zur Behandlungsnachstellung von minimalinvasiven Katheterbehandlungen, beispielsweise intrakraniellen Aneurysmen, geschaffen. Dazu wird eine Nachbildung des für die minimalinvasive Behandlung von intrakraniellen Aneurysmen relevanten Gefäßbaums des Menschen mit einem Blutkreislaufsystem und der Möglichkeit zur Anpassung einzelner Gefäßabschnitte zur Realisierung unterschiedlicher Trainingsszenarien in einer Übungsregion eines Systems realisiert. Der Aufbau des medizinischen Trainingsmodells kann modular gestaltet sein und kann bestehen aus standardisierten Komponenten (in jedem Trainingsszenario genutzt), varianten Komponenten (Trainingsszenario prägende Komponenten) und patientenspezifische Komponenten (entsprechend einer originalen patientenspezifischen Anatomie angepasst). Vorzugsweise handelt es sich bei dem medizinischen Trainingsmodell um beispielsweise ein neurointerventionelles Trainingsmodell.

Erfindungsgemäß wird eine einfache Integration mit einer schnellen Austauschbarkeit von patientenspezifischen Gefäßgeometrien in Kombination mit der Nachstellung eines Blutkreislaufsystems erreicht, so dass eine einfache, realitätsnahe Konfiguration unterschiedlicher und individueller Trainingsszenarien von medizinischen, insbesondere neurointerventionellen Behandlungen möglich wird.

Das Trainingsmodell kann dabei auch zumindest teilweise die Neuroanatomie umfassen, wonach die arterielle Blutversorgung des Gehirns über die Vertebralarterien (so genanntes hinteres Stromgebiet) und die arteria carotis interna erfolgt. Beide Stromgebiete sind mittels des circulus arteriosus cerebri (willisii) miteinander verbunden. Der circulus arteriosus cerebri (willisii) stellt einen Anastomosenkreislauf zwischen dem Karotisstromgebiet und dem vertebrobasilären Stromgebiet dar. Die Verbindung der Blutversorgung beider Hirnhälften und der Stromgebiete erfolgt im Bereich der Hirnbasis über die arteria communicans anterior und die arteriae communicantes posteriores. Diesen Gefäßverbindungen und anderen benachbarten Teilungsstellen von Arterien kommt klinisch gesehen eine besondere Bedeutung zu, da sie die Hauptlokalisation von krankhaften Gefäßerweiterungen (Aneurysmen) darstellen, welche bei Ruptur zu einer lebensbedrohlichen Subarachnoidalblutung führen können. Die Aneurysmen treten dort insbesondere an den Teilungsstellen der Arterien auf.

Das Trainingsmodell ermöglicht mit der erfindungsgemäßen Schnellkupplung ein patientenspezifisches anatomisches Nachbilden von Teilstücken arterieller Stromwege des Gehirns und bildet eine Anschlussvorrichtung für ein oder mehrere additiv bzw. generativ gefertigte Gefäßmodelle, insbesondere Aneurysmen, deren neuroradiologische Behandlung es bedarf. Die Teilungsstellen der Arterien können nachgeformt und kombiniert werden mit patientenspezifischen Aneurysmen. Die Positionierung mehrerer Stromwege in einem Trainingssystem wird stark vereinfacht. Das Trainingsmodell bildet folglich den für die minimalinvasive Gefäßbehandlung relevanten Gefäßbaum mit der Möglichkeit des Austausches einzelner ggf. patientenoriginaler Geometrien nach und kann dabei ein Blutkreislaufersatzsystem anbieten.

Die Normierung der Kupplungsanschlussöffnungen führt die Lumen der patientenspezifischen Gefäße auf eine wählbare lichte Weite, wozu ein Adapter in einem Übergangsbereich beispielsweise konisch reduzierend oder konisch erweiternd ist, stets mit dem Ziel, einen kantenfreien Übergang zu schaffen. Die Schnellkupplung kann dabei über die Kupplungsstücke eine Vorratsfläche liefern für eine Varianz der Normierung der Kupplungsanschlussöffnung, so dass gegebenenfalls gleiche mechanische Verbindungen mit unterschiedlich normierten lichten Weiten der Kupplungsanschlussöffnung ausgestattet werden können. Ein wesentlicher Vorteil besteht darin, dass abhängig von der Position der Kupplung verschiedene typische Durchmesser der Gefäße nachstellbar sind. Das ist mit diesen unterschiedlich normierten Weiten möglich. Näher am Herzen sind die Gefäßdurchmesser i.d.R. größer als flußabwärts. Weiterhin sind Gefäßerkrankungen von Kindern, Jungendlichen als auch Erwachsenen mit Lumen der Gefäße in unterschiedlichen Größen an einem einzigen Trainingsmodell nachstellbar

Innenliegende Geometrien sind demnach individuell anpassbar, während die Außengeometrie einheitlich wählbar ist für eine einfache und standardisierte Montierbarkeit. Die erfindungsgemäßen Adapter können additiv gefertigt direkt am Gefäßmodell integriert sein. Für eine dichtende Verbindung der Kupplungskörper können geeignete Dichtung eingesetzt werden.

Vorteilhaft ist ferner die Möglichkeit der Anwendung realer Instrumente, realitätsnahes Sondieren und Behandeln von zerebralen Aneurysmen, Nachstellung von physiologischen Eigenschaften, wie Temperatur, Blutfluss und Pulsation. Die hohe Geometriefreiheit additiver oder generativer Verfahren ermöglicht dabei die Fertigung von Gefäßmodellen, die eine exakte dreidimensionale Nachbildung von patientenindividuellen intrakraniellen Aneurysmen mit den anliegenden Gefäßinnenräumen sind.

Weitere Ausgestaltungen und Vorteile der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch ein neurointerventionelles Trainingsmodell HANNES mit einem modularen Aufbau,
Fig. 2 zeigt schematisch eine perspektivische Darstellung eines individuellen Gefäßmodells mit Adapter als Kupplungsstück gemäß einer ersten mechanischen Verbindung,
Fig. 3 zeigt schematisch eine perspektivische Darstellung eines individuellen Gefäßmodells mit Adapter als Kupplungsstück gemäß einer zweiten mechanischen Verbindung,
Fig. 4 zeigt schematisch einen Schnitt zusammengefügter Kupplungsstücke als Adapter patientenspezifischer Geometrien (individuell) mit normierter Kupplungsanschlussöffnung,
Fig. 5 zeigt schematisch einen modularen Gefäßbaum mit Adapterpositionierungen bei dem Trainingsmodell HANNES.

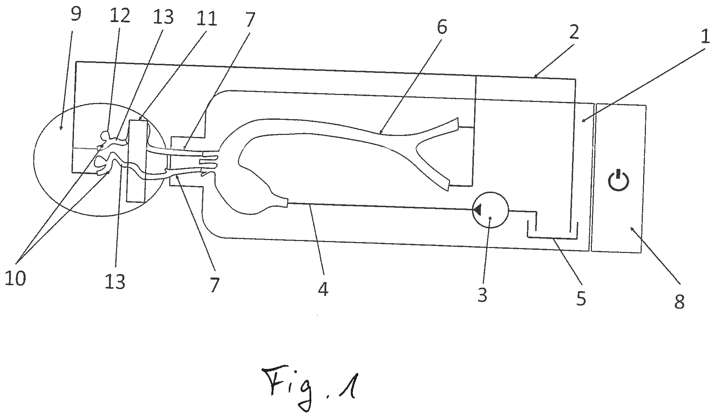

Wie Fig. 1 zeigt, betrifft die Erfindung ein medizinisches, beispielsweise ein neurointerventionelles Trainingsmodell mit einem modularen Grundaufbau, wie dieser beispielsweise von dem Trainingsmodell HANNES (HAmburger ANatomisches NEurointerventionelles Simulationsmodell) bekannt ist. Entwickelt wurde HANNES von der TU Hamburg im Rahmen des Projekts ELBE-NTM, und zwar gefördert durch das Bundesministerium für Bildung und Forschung der BRD im Rahmen der BMBF-Fördermaßnahme "Alternativmethoden zum Tierversuch".

Der modulare Grundaufbau des Trainingsmodells ermöglicht die Kombination von Modulen, und zwar standardisierten oder varianten Modulen mit austauschbaren individualisierten Modulen. Ein Hauptaugenmerk liegt auf der Integration von patientenspezifischen und individualisierten Geometrien. Patientenspezifische Aneurysmamodelle können beispielsweise auf Grundlage von medizinischen Bilddaten von Patienten in einem standadisierten Individualisierungsprozess additiv, d.h. im Schichtbauverfahren bzw. 3D-Druck, gefertigt werden. Ein Portfolio unterschiedlichster Aneurysmageometrien können als Trainingsgrundlage bereitgestellt werden.

Der modulare Grundaufbau des Trainingsmodells umfasst ein Grundgestell 1, das zur Anbringung und/oder Positionierung weiterer Komponenten dient und in seinen Abmessungen an die Größe eines menschlichen Körpers angepasst sein kann. An dem Grundgestell 1 ist ein Fluidsystem 2 angeordnet, das einen Blutkreislauf nachstellt. Das Fluidsystem 2 umfasst mindestens eine Pumpe 3 und einen verzweigten, aus Schläuchen und/oder sonstigen Leitungen gebildeten Strömungsweg 4, einem Vorlauf, der über einen Rücklauf zurück in einen Tank 5 führt, aus dem die Pumpe 3 beispielsweise fördert. Der Strömungsweg 4 bildet mindestens einen Gefäßbaum 6 nach, von dem vorzugsweise mehrere schlauchförmige Neurostromwege 7 zur arteriellen Blutversorgung beispielsweise des Gehirns und der Gefäßmodelle 10 abzweigen. Es können vorzugsweise wie in der Natur drei Wege von der Aorta abzweigen, die dann zu vier blutversorgenden Gefäßen des Gehirns werden, und zwar vorne zwei und hinten zwei, und damit insgesamt vier.

Die Pumpe 3 fördert einen einstellbaren Volumenstrom, der über den zum Fluidsystem 2 gehörenden Strömungsweg 4 in den Gefäßbaum 6 einfließt. Mittels nicht dargestellter Ventile und beispielsweise Bypasssysteme sind Druckpulsationen ähnlich zum menschlichen Blutdruck erzeugbar. Eine Steuereinheit 8 kann zum Einstellen von Puls, Volumenstrom und beispielsweise Temperatur Verwendung finden.

An das Grundgestell 1 ist kopfseitig ein Kopfmodell 9 angestellt. Eine Verbindung kann erfolgen über ein im Kopfmodell 9 integrierbares Schädelbasismodell 11 und die Neurostromwege 7. Das Schädelbasismodell 11 kann die Schädelbasis mit integriertem Gefäßverlauf und einer integrierten Halterung nachstellen.

Das Kopfmodell 9 und das Schädelbasismodell 11 ermöglichen die Positionierung eines oder mehrerer, hier beispielsweise zwei, Gefäßmodelle 10, insbesondere sogenannte Aneurysmamodelle, bei denen die Gefäßmodelle 10 eine oder mehrere Aussackungen 12 aufweisen. Das oder die Gefäßmodelle 10 sind dazu über die Halterung 11 an den Neurostromweg 7 anschließbar. Das Kopfmodell 9 ist variant austauschbar. Das Fluidsystem 2 bildet ein Blutkreislaufersatzsystem nach.

Das jeweilige Gefäßmodell 10 ist patientenspezifisch individualisiert ausgebildet und über mindestens eine Schnellkupplung 14 lösbar und austauschbar eingangsseitig an das Fluidsystem 2 und deren Neurostromweg 7 ankoppelbar. Die Anschlusstechnik wird nachstehend noch im Einzelnen beschrieben. Das jeweilige Gefäßmodell 10 ist somit austauschbar in einer Übungsregion, hier dem Kopfmodell 9, des Trainingsmodells positionierbar, wobei die Anzahl und die jeweiligen Geometrien der Gefäßmodelle 10 patientenspezifisch individuell und nach Krankheitsbild wählbar sind, wozu insbesondere auch die individuellen Innengeometrien der Lumen der Gefäße 13 stromaufwärts der krankhaften Aussackung 12 zählen.

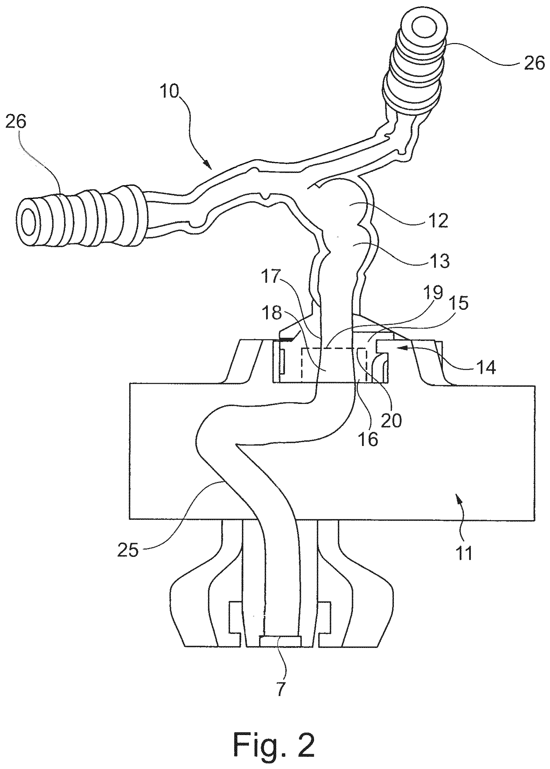

Die Fig. 2 bis Fig. 4 zeigen die erfindungsgemäße Anschlusstechnik bei einem medizinischen, insbesondere neurointerventionellen Trainingsmodell mit mindestens einem additiv oder generativ gefertigten, individualisierbaren Gefäßmodell 10, das austauschbar in mindestens einer Übungsregion an das Fluidsystem 2 mit Neurostromweg 7 eines anatomisch nachgebildeten Trainingsmodells mit dem jeweils patientenspezifisch nachgebildeten Lumen eines Gefäßes 13, das vorzugsweise stromaufwärts einer Aussackung 12 ausgebildet ist, anschließbar ist.

Das mit einer patientenspezifischen Geometrie nachgebildete Gefäßmodell 10 ist über eine hydraulische Schnellkupplung 14 an das Fluidsystem 2 anschließbar. Die hydraulische Schnellkupplung 14 umfasst als Kupplungsstücke 15, 16 einen Stecker und eine Muffe oder Buchse, die jeweils mit einem inneren Strömungskanal 17, 18 versehen sind zur dichten Verbindung bei zusammengefügten Kupplungsstücken 15, 16. Jeweils eines der Kupplungsstücke 15 und/oder 16 ist als Adapter anschlussseitig an dem Gefäßmodell 10 ausgebildet mit einem Durchmesser verändernden Strömungskanalverlauf 17, der das Lumen des Gefäßes 13 des patientenspezifischen Gefäßmodells 10 an eine normierte Kupplungsanschlussöffnung 19 anschließt. Die Kupplungsanschlussöffnung 19 weist beispielsweise einen Durchmesser d1 auf, der größer oder kleiner ist als eine lichte Weite d2, wobei d2 nicht kreisförmig sein muss, eines Lumens eines Gefäßes 13, die sogenannte individuelle Innengeometrie, eines Gefäßmodells 10. Mittels des Kupplungsstücks 15 wird der Durchmesser d2 der individuellen Innengeometrie überführt in den normierten Durchmesser d1 der Kupplungsanschlussöffnung 19.

Zur additiven Fertigung eines Gefäßmodelle 10 gehört somit vorzugsweise auch die additive Fertigung eines Adapters, der als Kupplungsstück 15 einen erweiternden oder reduzierenden Übergang 22 auf eine normierte Kupplungsanschlussöffnung 19 bereitstellt unter Veränderung des individuellen Durchmessers d2 auf einen normierten Durchmesser d1. Eine Zwangsführung ist gegeben.

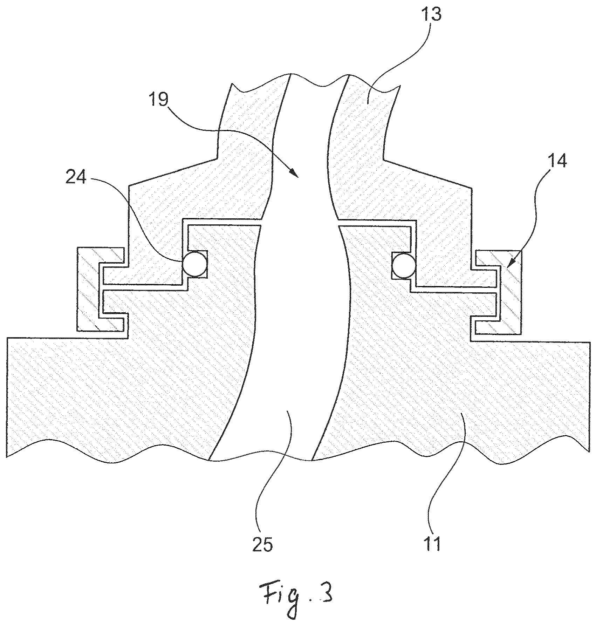

Die Innengeometriegestaltung ist somit patientenindividuell möglich, ohne dass dadurch auf die Außengeometrie einer dichtenden mechanischen Verbindung Einfluss genommen werden muss. Die Art der mechanischen Verbindung ist dann frei wählbar und kann beispielsweise als Steckverbindung, wie in Fig. 3 dargestellt, gewählt werden oder als Drehverbindung oder Bajonettverbindung usw. ausgebildet sein.

Wie Fig. 3 zeigt, können Stecker und Buchse einer Schnellkupplung 14 so ausgebildet sein, dass zusätzlich zu einem Einschieben des Steckers in die jeweilige Buchse auch ein Verdrehen vorgesehen sein kann mit randseitigen Anziehrampen. Vorteilhaft ist ferner, wenn die Schnellverschlusskupplung eine flachdichtende oder bündig dichtende Kupplung 14 ist. Bei der flachdichtenden Kupplung sind Stecker und Buchse so konstruiert, dass dann, wenn der Stecker von der Buchse getrennt wird, sowohl der Stecker als auch die Buchse flache Endflächen aufweisen. Stecker und Buchse weisen vorteilhafterweise jeweils eine insgesamt zylindrische Form auf, was das Einbringen von Dichtungsringen 24 zwischen Steckeraußenwandung und Buchseninnenwandung vereinfacht.

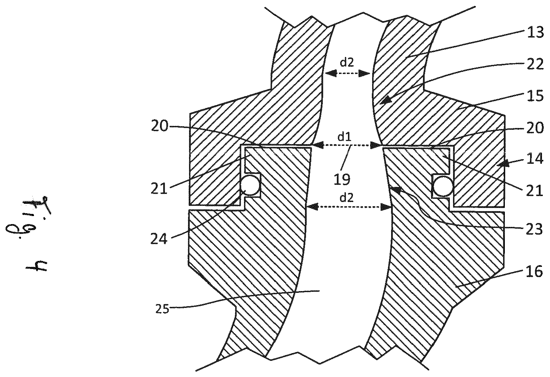

Wie insbesondere Fig. 4 zeigt, können die Kupplungsstücke 15, 16 in einer verriegelten Kupplungslage aneinanderliegende Kupplungsstücke 15, 16 bilden, die Endanschläge 21 für eine Öffnungsdurchmesser-Varianz der normierten Kupplungsanschlussöffnung 19 bilden. Dies bedeutet, dass die normierte Kupplungsanschlussöffnung 19 mit unterschiedlichen Durchmessern d1 in das Trainingsmodell integrierbar ist. Es gibt quasi eine Vorratsfläche 20 für einen variablen normierten Durchmesser d1, der für die Kupplungsstücke 15, 16 für eine vorzugsweise absatzfreie Lösung gleich zu wählen ist.

Verschiedene Gefäßdurchmesser im Verlauf eines Flusses können nachgestellt werden. Die lichte Weite eines Lumens eines patientenindividuellen Gefäßes 13 ist bei Kindern, Jugendlichen und Erwachsenen weiblichen, männlichen oder diversen Geschlechts unterschiedlich und kann bei der Wahl der Größe des Durchmessers d1 einer normierten Kupplungsanschlussöffnung 19 Berücksichtigung finden.

Die Schnellkupplung 14 kann als eine manuell lösbare mechanische Verbindung ausgebildet sein, wobei die Kupplungsstücke 15, 16 jeweils auf der zum anderen Kupplungsstück weisenden Seite eine Dichtfläche aufweisen und zwischen den Dichtflächen ein Dichtring 24 angeordnet sein kann.

Die Kupplungsstücke 15, 16 können einen Strömungskanalverlauf 17, 18 mit einem konischen Bereich als kantenlosen Übergang 22 zwischen Lumen des Gefäßes 13 und normierter Kupplungsanschlussöffnung 19 aufweisen. Stecker und Buchse/Muffe können zylindrisch ausgebildet sein und jeweils einen axialen Strömungskanal aufnehmen. Der konische Bereich des Übergangs 22 kann konisch reduzierend und/oder erweiternd als Hohlschaftkegelstumpf für eine Plananlage an der Vorratsfläche 20 ausgebildet sein. Eine positive oder negative Steigung eines Flankenwinkels des konischen Bereichs ist wählbar zur Ausbildung eines kegelförmigen Übergangsstücks zwischen zwei Abschnitten unterschiedlicher Nennweiten mit Plananlage über einen Bund des Übergangs 22.

Die Schnellkupplungen 14 können als flachdichtende oder bündig dichtende Kupplungen ausgebildet sein.

Ein oder mehrere der Gefäßmodelle 10 können an mindestens einem Schädelbasismodell 11 mit integrierbarem Halter und/oder auch direkt an Neurostromweg 7 lösbar anatomisch positioniert sein, wozu dieser Halter 11 als ein Festkörperblock ausgebildet sein kann mit menschlichen Arterien invers nachbildenden innenliegenden Kanälen 25 mit patientenspezifischer Geometrie, die beidseitig endseitig nach außen geführt sein können und in jeweils ein Kupplungsstück 16 bildenden Anschlussstellen enden können. Der Halter 11 kann aus einer Vergussmasse mit verlorener Form oder durch ein additives Fertigungsverfahren hergestellt sein. Auch hier findet sich ein Übergangsbereich 23 von patientenspezifischem Lumen zur normierten Kupplungsanschlussöffnung 19. Das zum Übergang 22 Ausgeführte gilt entsprechend für den Übergang 23, wie insbesondere Fig. 4 zeigt. Ein glatter und kantenfreier Übergang der Innengeometrie kann dadurch gewährleistet werden.

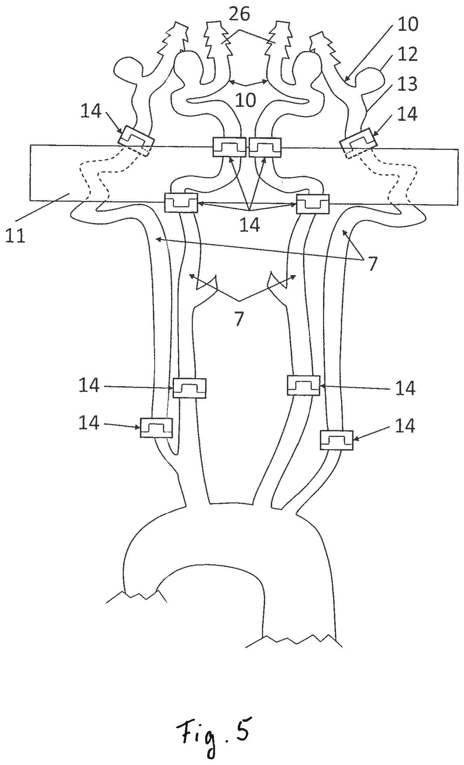

Wie Fig. 5 zeigt, können eine Mehrzahl Übergänge 22, 23 mit patientenspezifischer Geometrie über Schnittstellen implementierbar sein, die jeweils mittels Schnellkupplungen 14 an das Fluidsystem 2 lösbar anschließbar sind. Alle Schnellkupplungen 14 können einen konstanten oder auch variierbaren normierten Durchmesser d1 im Übergang 22, 23 aufweisen.

Mit der erfindungsgemäßen Anschlusstechnik ist es also möglich, mehrere Arterienabschnitte nachbildende Fluidleitungen beabstandet zueinander als Durchgangspassagen nachzubilden, was ermöglicht, mehrere Gefäßmodelle gleichzeitig zu positionieren. Verschiedene Positionen der Aneurysmen können nachgebildet werden, denn nicht alle Hirnabschnitte sind gleichermaßen von Aneurysmen betroffen. Mit der erfindungsgemäßen Schnellkupplung 14 können mehrere krankhafte oder gesunde Gefäße hintereinander positioniert/montiert und/oder im Bereich von Teilungsstellen nachgebildet werden. Betroffene krankhafte Gefäßabschnitte können entsprechend originaler Patientendaten im Modell nachgebildet werden. Modelle mit einem oder mehreren Aneurysmen 12 sind möglich und können auch im Bereich von Teilungsstellen nachgebildet werden.

Für einen Rücklauf im Fluidsystem 2 können die Gefäßmodelle 10 stromabwärts mindestens einer Aussackung 12 bekannte Anschlusselemente 26 endseitig tragen, um an das Fluidsystem 2 anschließbar zu sein. Das Fluidsystem 2 kann zur Simulation des menschlichen Blutkreislaufsystems hinsichtlich Temperatur, Druck und Viskosität des Fluids in bekannter Weise ausgebildet sein.

Vorstehend wurde die Erfindung exemplarisch anhand eines neurointerventionellen Trainingsmodells beschrieben. Die Erfindung ist zudem realisierbar bei jedem medizinischen Trainingsmodell, bei dem patientenspezifische oder standardisierte Blutgefäßmodelle in austauschbaren Übungsregionen für Trainingsmethoden platziert werden sollen. Gleiches gilt für Trainingsmodelle, die als Behandlungsmodelle/Simulationsmodelle für beispielsweise wissenschaftliche Zwecke, Forschungszwecke, zur Entwicklung von Instrumenten usw. verwendet werden.

## Patentansprüche

1. Medizinisches Trainingsmodell mit additiv gefertigten, individualisierbaren Gefäßmodellen (10), die austauschbar in mindestens einer Übungsregion an das Fluidsystem (2) eines anatomisch nachgebildeten Trainingsmodell mit dem jeweils patientenspezifisch nachgebildeten Lumen anschließbar sind, wobei das Fluidsystem (2) ein Blutkreislaufersatzsystem nachbildet, ein mit patientenspezifischer Geometrie nachgebildetes Gefäßmodell (10) über eine hydraulische Kupplung an das Fluidsystem (2) anschließbar ist, die hydraulische Kupplung als Kupplungsstücke (15, 16) einen Stecker und eine Muffe oder Buchse umfasst, die jeweils mit einem inneren Strömungskanal (17, 18) versehen sind zur dichten Verbindung bei zusammengefügten Kupplungsstücken (15, 16), **dadurch gekennzeichnet, dass** jeweils eines der Kupplungsstücke (15, 16) als Adapter anschlussseitig an dem Gefäßmodell (10) ausgebildet ist mit einem Durchmesser verändernden Strömungskanalverlauf (17), der das Lumen des Gefäßes (13) des patientenspezifischen Gefäßmodells (10) an eine normierte Kupplungsanschlussöffnung (19) anschließt, wobei die Kupplungsstücke (15, 16) in einer verriegelten Kupplungslage aneinanderliegende Kupplungskörper einer hydraulischen Schnellkupplung (14) bilden, die Endanschläge (21) für eine Öffnungsdurchmesser-Varianz der normierten Kupplungsanschlussöffnung (19) bilden, und die Kupplungsstücke (15, 16) einen Strömungskanalverlauf mit einem konischen Bereich als kantenlosen Übergang (22, 23) zwischen Lumen des Gefäßes (13) des patientenspezifischen Gefäßmodells (10) und normierter Kupplungsanschlussöffnung (19) aufweisen.

2. Trainingsmodell nach Anspruch 1, **dadurch gekennzeichnet, dass** die Schnellkupplung (14) als eine manuell lösbare mechanische Verbindung ausgebildet ist, wobei die Kupplungsstücke (15, 16) jeweils auf der zum anderen Kupplungsstück (15, 16) weisenden Seite eine Dichtfläche aufweisen und zwischen den Dichtflächen ein Dichtring (24) angeordnet ist.

3. Trainingsmodell nach einem der Ansprüche 1 oder 2, **dadurch gekennzeichnet, dass** Stecker und Buchse/Muffe zylindrisch ausgebildet sind und jeweils einen axialen Strömungskanal (17, 18) aufnehmen und die Schnellkupplungen (14) als flachdichtende oder bündig dichtende Kupplungen ausgebildet sind

4. Trainingsmodell nach einem der Ansprüche 1 bis 3, **dadurch gekennzeichnet, dass** ein oder mehrere der Gefäßmodelle (10) an mindestens einer Schädelbasis (11) mit integrierbarem Halter lösbar anatomisch positioniert ist/sind, wozu die Schädelbasis (11) als ein Festkörperblock ausgebildet ist mit menschlichen Arterien invers nachbildenden innenliegenden Kanälen (25) mit patientenspezifischer Geometrie, die beidseitig endseitig nach außen geführt sind in rohrförmige, jeweils ein Kupplungsstück (15, 16) bildende Anschlussstellen.

5. Trainingsmodell nach einem der Ansprüche 1 bis 4, **dadurch gekennzeichnet, dass** der Festkörperblock aus einer Vergussmasse mit verlorener Form oder durch ein additives Fertigungsverfahren hergestellt ist.

6. Trainingsmodell nach einem der Ansprüche 1 bis 5, **dadurch gekennzeichnet, dass** eine Mehrzahl Übungsregionen mit patientenspezifischer Geometrie über Schnittstellen implementierbar sind, die jeweils mittels Schnellkupplungen (14) an das Fluidsystem (2) lösbar anschließbar sind und die einen variierbaren konstanten Durchmesser im Übergang aufweisen.

7. Trainingsmodell nach einem der Ansprüche 1 bis 6, **dadurch gekennzeichnet, dass** das Fluidsystem (2) zur Simulation des menschlichen Blutkreislaufsystems hinsichtlich Temperatur und Druck des Fluids ausgebildet ist.

8. Trainingsmodell nach einem der Ansprüche 1 bis 7, **dadurch gekennzeichnet, dass** das Lumen des Gefäßes (13) des patientenspezifischen Gefäßmodells (10) eine lichte Weite (d2) aufweist und die normierte Kupplungsanschlussöffnung (19) mit einem normierten Durchmesser (d1) ausgebildet ist, und die Kupplungsstücke (15, 16) einen Strömungskanal (17, 18) mit einem konischen Bereich als kantenlosen Übergang (22, 23) zwischen Lumen des Gefäßes (13) und normierter Kupplungsöffnung (19) aufweisen.

9. Trainingsmodell nach Anspruch 8, **dadurch gekennzeichnet, dass** der konische Bereich des Übergangs (22, 23) reduzierend oder erweiternd als Hohlschaftkegelstumpf für eine Plananlage an einer Vorratsfläche (20) ausgebildet ist.

## Claims

1. Medical training model with additively manufactured, individualized vessel models (10) which can be interchangeably connected in at least one training region to the fluid system (2) of an anatomically replicated training model with the respective patient-specific replicated lumen, and the fluid system (2) simulates a blood circulation replacement system, a vessel model (10) reproduced with patient-specific geometry can be connected to the fluid system (2) via a hydraulic coupling, the hydraulic coupling comprises as coupling pieces (15, 16) a plug and a sleeve or bushing, which are each provided with an inner flow channel (17, 18) for sealed connection when the coupling pieces (15, 16) are joined together, **characterized in that** in each case one of the coupling pieces (15, 16) is designed as an adapter on the connection side of the vessel model (10) with a diameter-changing flow channel course (17) which connects the lumen of the vessel (13) of the patient-specific vessel model (10) to a standardized coupling connection opening (19), the coupling pieces (15, 16) form coupling bodies lying against each other in a locked coupling position, that form end stops (21) for an opening diameter variance of the standardized coupling connection opening (19), and the coupling pieces (15, 16) have a flow channel course with a conical region as an edgeless transition (22, 23) between the lumen of the vessel (13) of the patient-specific vessel model (10) and the standardized coupling connection opening (19).

2. Training model according to claim 1, **characterized in that** the quick coupling (14) is designed as a manually releasable mechanical connection, the coupling pieces (15, 16) each having a sealing surface on the side facing the other coupling piece (15, 16) and a sealing ring (24) being arranged between the sealing surfaces.

3. Training model according to claim 1 or 2, **characterized in that** the plug and socket/sleeve are cylindrical and each accommodate an axial flow channel (17, 18), and the quick-action couplings (14) are designed as flat-sealing or flush-sealing couplings.

4. Training model according to any one of claims 1 to 3, **characterized in that** one or more of the vascular models (10) is/are detachably anatomically positioned on at least one skull base (11) with integrated holder, for which purpose the skull base (11) is designed as a solid body block with internal channels (25) inversely reproducing human arteries and having patient-specific geometry, which channels are guided outwardly at both ends into tubular connection points each forming a coupling piece (15, 16).

5. Training model according to any one of claims 1 to 4, **characterized in that** the solid block is made of a lost mold casting compound or by an additive manufacturing process.

6. Training model according to any one of claims 1 to 5, **characterized in that** a plurality of exercise regions with patient-specific geometry can be implemented via interfaces, each of which can be detachably connected to the fluid system (2) by means of quick couplings (14) and which have a variable constant diameter in the transition.

7. Training model according to any one of claims 1 to 6, **characterized in that** the fluid system (2) for simulating the human blood circulation system with regard to the temperature and pressure of the fluid.

8. Training model according to any one of claims 1 to 7, **characterized in that** the lumen of the vessel (13) of the patient-specific vascular model (10) has a clear width (d2) and the standardized coupling connection opening (19) is formed with a standardized diameter (d1), and the coupling pieces (15, 16) have a flow channel (17, 18) with a conical region as an edgeless transition (22, 23) between the lumen of the vessel (13) and the standardized coupling opening (19).

9. Training model according to claim 8, **characterized in that** the conical region of the transition (22, 23) is formed in a reducing or widening manner as a hollow shaft truncated cone for a flat bearing on a supply surface (20).

## Revendications

1. Modèle d'entraînement médical comportant des modèles vasculaires (10) fabriqués de manière additive personnalisables individuellement, qui peuvent être raccordés de manière remplaçable dans au moins une région d'exercice au niveau du système de fluide (2) d'un modèle d'entraînement reproduisant l'anatomie avec la lumière reproduite spécifiquement pour chaque patient, dans lequel le système de fluide (2) reproduit un système de remplacement de circulation sanguine, un modèle vasculaire (10) reproduit avec la géométrie spécifique au patient peut être raccordé au système de fluide (2) par l'intermédiaire d'un accouplement hydraulique, l'accouplement hydraulique comprend en tant que pièces d'accouplement (15, 16) un connecteur et un manchon ou une douille, qui sont respectivement dotés d'un canal d'écoulement interne (17, 18) pour un raccordement étanche avec des pièces d'accouplement (15, 16) assemblées, **caractérisé en ce que** respectivement l'une des pièces d'accouplement (15, 16) est conçue côté raccordement comme un adaptateur sur le modèle vasculaire (10), avec un tracé de canal d'écoulement à diamètre variable (17), qui raccorde la lumière du vaisseau (13) du modèle vasculaire (10) spécifique au patient à une ouverture de raccordement d'accouplement normalisée (19), dans lequel les pièces d'accouplement (15, 16), dans une position d'accouplement verrouillée, forment des corps d'accouplement adjacents d'un accouplement rapide hydraulique (14), qui forment des butées d'extrémité (21) pour une variance de diamètre d'ouverture de l'ouverture de raccordement d'accouplement normalisée (19), et les pièces d'accouplement (15, 16) présentent un tracé de canal d'écoulement avec une zone conique comme transition sans arête (22, 23) entre des lumières du vaisseau (13) du modèle vasculaire (10) spécifique au patient et l'ouverture de raccordement d'accouplement normalisée (19).

2. Modèle d'entraînement selon la revendication 1, **caractérisé en ce que** l'accouplement rapide (14) est conçu comme une liaison mécanique amovible manuelle, dans lequel les pièces d'accouplement (15, 16) présentent respectivement sur le côté tourné vers l'autre pièce d'accouplement (15, 16) une surface d'étanchéité, et une bague d'étanchéité (24) est agencée entre les surfaces d'étanchéité.

3. Modèle d'entraînement selon l'une des revendications 1 ou 2, **caractérisé en ce que** le connecteur et le manchon/la douille sont conçus cylindriques et reçoivent respectivement un canal d'écoulement axial (17, 18) et les accouplements rapides (14) sont conçus comme des accouplements à étanchéité plate ou à étanchéité affleurante.

4. Modèle d'entraînement selon l'une des revendications 1 à 3, **caractérisé en ce qu'**un ou plusieurs des modèles vasculaires (10) est/sont positionné(s) de manière anatomique et amovible sur au moins une base crânienne (11) avec support intégrable, dans lequel la base crânienne (11) est conçue comme un bloc de corps solides avec canaux internes (25) reproduisant à l'envers des artères humaines avec une géométrie spécifique au patient, qui sont guidés vers l'extérieur des deux côtés aux extrémités dans des points de raccordement tubulaires formant respectivement une pièce d'accouplement (15, 16).

5. Modèle d'entraînement selon l'une des revendications 1 à 4, **caractérisé en ce que** le bloc de corps solides est fabriqué à partir d'une masse de scellement avec moule perdu ou par un procédé de fabrication additive.

6. Modèle d'entraînement selon l'une des revendications 1 à 5, **caractérisé en ce qu'**une pluralité de régions d'exercice avec géométrie spécifique au patient peuvent être mises en œuvre par le biais d'interfaces qui peuvent être raccordées de manière amovible au système de fluide (2) respectivement par le biais d'accouplements rapides (14) et qui présentent un diamètre constant et variable dans la transition.

7. Modèle d'entraînement selon l'une des revendications 1 à 6, **caractérisé en ce que** le système de fluide (2) est conçu pour la simulation du système de circulation sanguine humain en ce qui concerne la température et la pression du fluide.

8. Modèle d'entraînement selon l'une des revendications 1 à 7, **caractérisé en ce que** la lumière du vaisseau (13) du modèle vasculaire (10) spécifique au patient présente une largeur libre (d2) et l'ouverture de raccordement d'accouplement normalisée (19) est conçue avec un diamètre normalisé (d1) et les pièces d'accouplement (15, 16) présentent un canal d'écoulement (17, 18) avec une zone conique comme transition sans arête (22, 23) entre la lumière du vaisseau (13) et l'ouverture d'accouplement normalisée (19).

9. Modèle d'entraînement selon la revendication 8, **caractérisé en ce que** la zone conique de la transition (22, 23) est conçue de manière réductrice ou élargissante comme un cône tronqué à tige creuse pour un appui plan sur une surface de réserve (20).
